# EUROPEAN PATENT SPECIFICATION

(11) **EP 3 624 635 B1**
(45) Date of publication and mention of the grant of the patent: **13.09.2023**
(21) Application number: 18731735.9
(22) Date of filing: 15.05.2018
(51) Int. Cl.: A47B 9/00

(54) **HEIGHT-ADJUSTABLE TABLE**
HÖHENVERSTELLBARER TISCH
TABLE RÉGLABLE EN HAUTEUR

(30) Priority: 15.05.2017 DK PA201700305
(43) Date of publication of application: 25.03.2020
(73) Proprietor: LINAK A/S, 6430 Nordborg (DK)
(72) Inventor: STAER MØLLER, Anne, 6400 Senderborg (DK)
(74) Representative: Høyer, Michael
(86) International application number: PCT/DK2018/000015
(87) International publication number: WO 2018/210386

(56) References cited:
- DE-A1- 19 604 329
- US-A1- 2014 096 706
- US-A1- 2016 128 467
- US-A1- 2016 353 880

## Description

The present invention relates to a height-adjustable table. Height-adjustable tables are also known as sit/stand desks.

A common height-adjustable table comprises a frame to which a table top is mounted. The frame is attached to one end of at least one linear actuator in the form of a lifting column. A foot is mounted to the other end of the lifting column. As examples of these types of lifting columns reference is made to WO/2004/040169 A1 and WO 2009/033486 A1 both LINAK A/S_{.} Other examples are disclosed by US 2014/096706 A1 and US 2016/128467 A1.

Although height-adjustable tables comprising a linear actuator system are becoming more widespread, it is a fact that many users do not make use of its most obvious functionality, i.e. the height-adjustment. This is in contrast to the known benefits that movement during the day has for health, especially for our metabolism. Standing and moving burns more calories than sitting and engages the leg muscles of the user. Besides the higher calorie burn when standing it is also proven that standing and moving during the day improves circulation, energy, stress and overall well-being of the user. Just the act of going from a seated position to a standing position forces the body to work against gravity and helps strengthen our stabilizer muscles. In general it is recommended that sedentary workers mix sitting and standing during an average workday - sitting or standing for no longer than one hour before changing position. A recommended goal is to strive for an extra 120 minutes of standing during a workday and to change postures at least 8 to 16 times.

The objective of the invention is to provide an improved height-adjustable table which can assist and motivate the user to use the height-adjustable table in a manner which increases health, calorie burn and well-being.

According to the invention this is solved by providing a height-adjustable table comprising at least one electric linear actuator, a controller for controlling the at least one linear electric actuator, a system for determining the actual height adjustment level of the adjustable table associated with the controller and providing input information to the controller about the actual height adjustment level of the adjustable table, an operating unit connected to the controller for user activation requesting an adjustment of the height level of the table by supplying the at least one linear actuator from an appropriate source of electrical energy. The controller comprises a memory for storing at least one height adjustment setting referring to a sitting position or a standing position. The controller comprising a timer device adapted to monitor the time for which the height adjustment setting has been in its present state, the states referring to a sitting position or a standing position. The controller comprising a memory for storing a predetermined programmable timer value for reminding the user to adjust the height of the height-adjustable table from the height adjustment setting, referring to a sitting position to a standing position or vice versa. The controller continuously compares the timer value obtained by the timer device with the predetermined programmable timer value and further calculates a value expressing the progress towards time-out of the predetermined programmable timer value. The height-adjustable table further comprises a light emitting arrangement, where the light emitting arrangement is adapted to emit light within a range of wavelengths starting with a first wavelength and ending with a second wavelength. The light emitting arrangement is adapted to emit light with a wavelength within the range of the wavelengths corresponding to the value expressing the progress towards time-out of the timer value.

In an embodiment of the height-adjustable table a time interval is defined as a range from the timer value to time-out of the timer value, and where the time interval is mapped into the range of wavelengths of the light emitting arrangement, such that the timer value corresponds to the first wavelength of the range of wavelengths and time-out of the timer value corresponds to the second wavelength of the range of wavelengths.

In an embodiment of the height-adjustable table, the light emitting arrangement emits light with a wavelength within the range of the wavelengths in an intermittent manner.

According to the invention, embodiment the height-adjustable table, the wavelength emitted by the light emitting arrangement changes color in a fluent transition from green, over orange to red.

In an embodiment of the height-adjustable table, the light emitting arrangement emits a wavelength outside the range of wavelengths to indicate a special state of the controller.

In an embodiment of the height-adjustable table, the first wavelength corresponds to a wavelength of approximately 500 nanometers and the second wavelength corresponds to a wavelength of approximately 700 nanometers.

In an embodiment of the height-adjustable table, the light emitting arrangement is arranged in the operating unit. In an embodiment of the height-adjustable table, the height-adjustable table comprises a table top in which the light emitting arrangement is arranged.

An embodiment of the invention will be described more fully below with reference to the accompanying drawing, in which:
Fig. 1 shows a perspective view of a height-adjustable table,
Fig. 2 illustrates a height-adjustable table in a sitting position,
Fig. 3 illustrates the height-adjustable table in a standing position,
Fig. 4 is a schematic diagram of the height-adjustable table,
Fig. 5 is a perspective view of the operating unit comprising a light guide,
Fig. 6 is a perspective view of the operating unit comprising a light diode,
Fig. 7 schematically illustrates a mapping of a time interval q into a range of wavelengths, and
Fig. 8 schematically illustrates a mapping of a time interval divided into sub time intervals into a range of wavelengths.

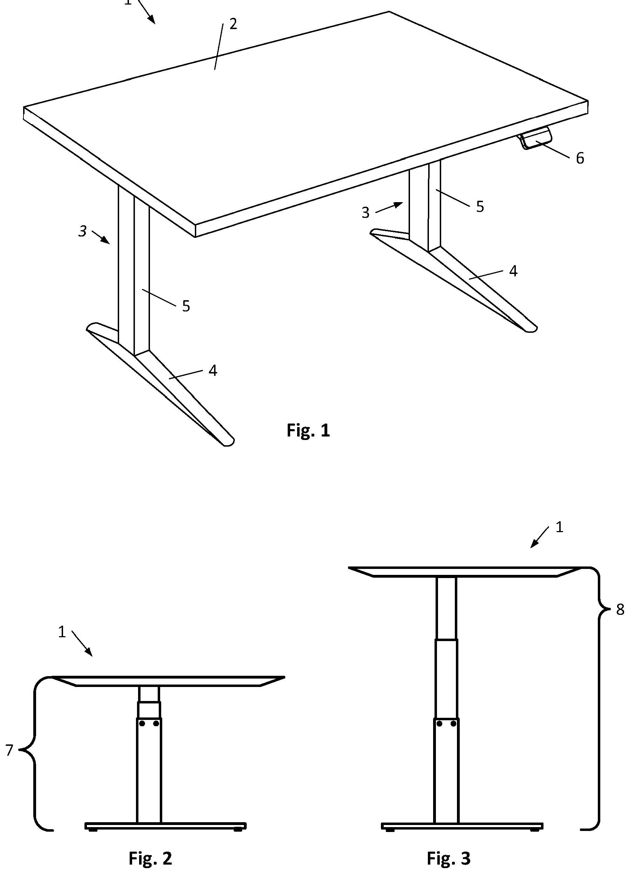

Fig. 1 shows a perspective view of a height-adjustable table 1 comprising a table top 2. At each side of the height-adjustable table 1 a linear actuator in the form of a lifting column 3 is mounted in a carrying frame (not shown) onto which the table top 2 is mounted. The other end of each lifting column 3 comprises a foot 4 on which the height-adjustable table 1 stands. The lifting columns 3 comprise a drive unit (not shown) and two or three mutually telescopically arranged profiles. One profile 5 is stationary fixed to the foot 4 and one profile (not referenced) is stationary fixed to the motor housing. Each lifting column 3 is driven by means of an electric motor, which through a gear drives a spindle. The spindle is furnished with a spindle nut secured to the telescopically movable profile(s). The height-adjustment of the table top 2 is thus performed by the lifting columns 3. The adjustment is achieved by activating the operating unit 6.

Figures 2 and 3 illustrate a side view of the height-adjustable table 1 in a sitting position 7 and a standing position 8, respectively. Since the length of the lifting columns 3 can be adjusted, the sitting position 7 and standing position 8 can be set to accommodate the physical characteristics and personal preferences of each individual user of the height-adjustable table 1.

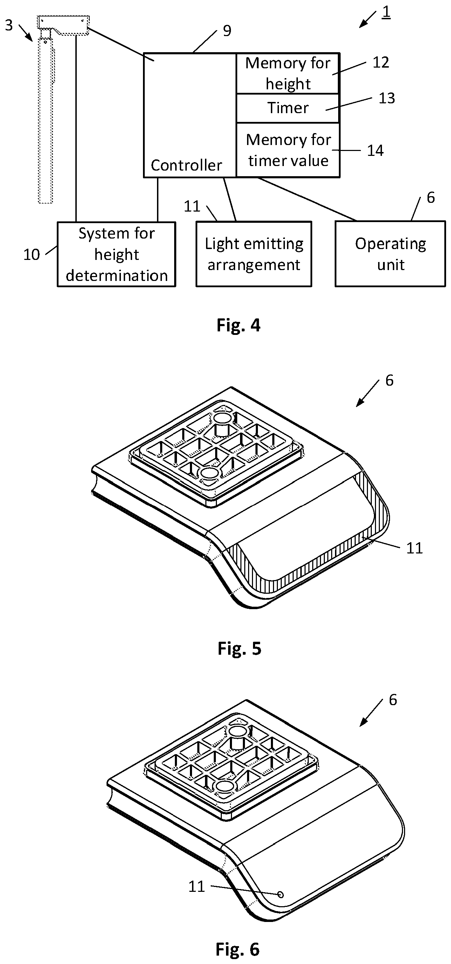

Fig. 4 depicts a schematic view of the height-adjustable table 1 comprising a linear actuator 3, a controller 9, a system 10 for determining the actual height adjustment level of the height-adjustable table 1, an operating unit 6, and a light emitting arrangement 11.

The system 10 for determining the actual height adjustment level could be determined by potentiometers or Hall sensors built into the linear actuators 3 or by other detection means such as an optical sensor. The system 10 for determining the actual height adjustment level provides input information about the actual height adjustment level to the controller 9.

The operating unit 6 is connected to the controller 9 for user activation requesting an adjustment of the height level of the height-adjustable table 1 by supplying the at least one linear actuator 3 from an appropriate source of electrical energy (not shown).

The controller 9 comprises a memory 12 for storing at least one height adjustment setting 7,8 referring to a sitting position 7 or a standing position 8. The controller 9 further comprises a timer device 13 adapted to monitor the time for which the height adjustment setting 7,8 has been in its present state, the states referring to a sitting position 7 or a standing position 8. The timer device 13, in other words, determines the elapsed time in which the height-adjustable table 1 has been in a sitting position 7 or a standing position 8.

The controller 9 further comprises a memory 14 for storing a predetermined programmable timer value for reminding the user to adjust the height of the height-adjustable table from the height adjustment setting 7,8 referring to a sitting position 7 to a standing position 8 or vice versa. The controller 9 continuously compares the timer value obtained by the timer device 13 with the predetermined programmable timer value of the memory 14.

The controller 9 is adapted to calculate a value expressing the progress towards time-out of predetermined programmable timer value of the memory 14.

The light emitting arrangement 11 is adapted to emit light within a range of wavelengths r starting with a first wavelength y ending with a second wavelength z. The light emitting arrangement 11 is adapted to emit light with a wavelength within the range of the wavelengths corresponding to the value expressing the progress towards time-out of the timer value.

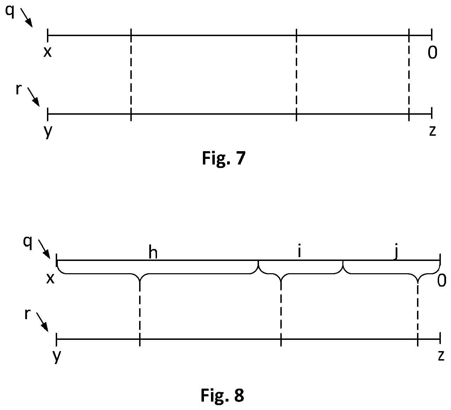

As schematically illustrated in Fig. 7, the controller 9 defines a time interval q as a range from the timer value x to time-out of the timer value x. The time interval q is mapped into the range of wavelengths r of the light emitting arrangement 11, such that the timer value x corresponds to the first wavelength y of the range of wavelengths r, and the time-out of the timer value corresponds to the second wavelength z of the range of wavelengths r. In this way each value of the time interval q is converted into a wavelength on the range of wavelengths r. The wavelength emitted by the light emitting arrangement 11 changes color in a fluent transition from green, over orange to red. The first wavelength (y) could correspond to a wavelength of approximately 500 nanometers and the second wavelength (z) corresponds to a wavelength of approximately 700 nanometers.

Not according to the invention, the time interval q of the controller could also be divided into at least two sub time intervals h,i,j such that each sub time interval h,i,j corresponds to a specific wavelength on the range of wavelengths r. As illustrated schematically in Fig. 8, time interval q of the controller 9 is divided into the three sub time intervals h,i,j such that each sub time interval h,i,j corresponds to a wavelength emitting a green, orange, and red color, respectively. This simplifies the number of states that users of the height adjustable table needs to relate to. In order to remind the user to adjust the height of the height adjustable table 1 the light emitting arrangement 11 can emit light with a wavelength within the range of the wavelengths r in an intermittent manner. This is meant to catch the attention of the user and prompt her or him to adjust the height-adjustable table 1.

To indicate to the user that the controller 9 is in a special state, the light emitting arrangement 11 can emit a wavelength outside the range of wavelengths r. A special state could for example be an indication of a successful Bluetooth pairing, successful storing of a height adjustment setting (standing position and/or sitting position).

As shown in Fig. 5 the light emitting arrangement 11 can be a light guide arranged in the operating unit 6. The light emitting arrangement 11 can also be arranged in the operating unit 6 as a small diode, as shown in Fig. 6. Alternatively the light emitting arrangement 11 can be arranged in the table top 2 of the height adjustable table 1.

## Claims

1. A height adjustable table (1) comprising
- at least one electric linear actuator (3),
- a controller (9) for controlling the at least one linear electrical actuator (3),
- a system for determining the actual height adjustment level of the adjustable table (1) associated with the controller (9) and providing input information to the controller (9) about the actual height adjustment level of the adjustable table (1),
- an operating unit (6) connected to the controller (9) for user activation requesting an adjustment of the height level of the table (1) by supplying the at least one linear actuator (3) from an appropriate source of electrical energy,
the controller (9) comprising
- a memory (12) for storing at least one height adjustment setting (7,8) referring to a sitting position or a standing position,
- a timer device (13) adapted to monitor the time for which the height adjustment setting (7,8) has been in its present state, the states referring to a sitting position or a standing position, and
- a memory (14) for storing a predetermined programmable timer value for reminding the user to adjust the height of the height-adjustable table (1) from the height adjustment setting (7,8) referring to a sitting position to a standing position or vice versa,
and where the controller (9) is configured to continuously compare the timer value obtained by the timer device (13) with the predetermined programmable timer value and to calculate a value expressing the progress towards time-out of the predetermined programmable timer value, and
where the height-adjustable table (1) further comprises a light emitting arrangement (11) adapted to emit light with a wavelength within a range of wavelengths starting with a first wavelength (y) and ending with a second wavelength (z) corresponding to the value expressing the progress towards time-out of the predetermined programmable timer value,
**characterized in that** the light emitting arrangement (11) is configured to change color of the emitted light in a fluent transition from green, over orange to red during said progress towards time-out of the predetermined programmable timer value.

2. A height-adjustable table (1) according to claim 1, **characterized in that** a time interval (q) defined as a range from the predetermined programmable timer value (x) to time-out of the predetermined programmable timer value (x) is mapped into the range of wavelengths of the light emitting arrangement (11), such that the predetermined programmable timer value (x) corresponds to the first wavelength (y) of the range of wavelengths and time-out of the timer value corresponds to the second wavelength (z) of the range of wavelengths.

3. A height-adjustable table (1) according to claim 1 or 2, **characterized in that** the light emitting arrangement (11) emits light with a wavelength within the range of the wavelengths in an intermittent manner.

4. A height-adjustable table (1) according to any one of claims 1 to 3, **characterized in that** the light emitting arrangement (11) emits a wavelength outside the range of wavelengths to indicate a special state of the controller (9) .

5. A height-adjustable table (1) according to any one of claims 1 to 4, **characterized in that** the first wavelength (y) correspond to a wavelength of approximately 500 nanometers and that the second wavelength (z) corresponds to a wavelength of approximately 700 nanometers.

6. A height-adjustable table (1) according to any one of claims 1 to 5, **characterized in that** the light emitting arrangement (11) is arranged in the operating unit (6).

7. A height-adjustable table (1) according to any one of claims 1 to 5, **characterized in that** the height-adjustable table (1) comprises a table top (2) in which the light emitting arrangement (11) is arranged.

## Patentansprüche

1. Höhenverstellbarer Tisch (1), umfassend
- mindestens einen elektrischen Linearantrieb (3),
- eine Steuerung (9) zum Steuern des mindestens einen elektrischen Linearantriebs (3),
- ein System zum Bestimmen des tatsächlichen Höheneinstellniveaus des verstellbaren Tisches (1), das mit der Steuerung (9) verbunden ist, und zum Bereitstellen von Eingangsinformationen an die Steuerung (9) über das tatsächliche Höheneinstellniveau des verstellbaren Tisches (1),
- eine Bedienungseinheit (6), die mit der Steuerung (9) verbunden ist, um durch Benutzeraktivierung eine Einstellung des Höhenniveaus des Tisches (1) anzufordern, indem der mindestens eine lineare Antrieb (3) von einer geeigneten elektrischen Energiequelle versorgt wird,
wobei die Steuerung (9) umfasst
- einen Speicher (12) zum Speichern mindestens einer Höheneinstelleinstellung (7, 8) bezogen auf eine Sitzposition oder eine Stehposition,
- eine Timervorrichtung (13), die so ausgelegt ist, dass sie die Zeit überwacht, in der sich die Höheneinstelleinstellung (7, 8) in ihrem gegenwärtigen Zustand befindet, wobei sich die Zustände auf eine Sitzposition oder eine Stehposition beziehen, und
- einen Speicher (14) zum Speichern eines vorbestimmten programmierbaren Timerwertes, um den Benutzer daran zu erinnern, die Höhe des höhenverstellbaren Tisches (1) von der Höheneinstelleinstellung (7, 8), die sich auf eine Sitzposition bezieht, auf eine Stehposition zu verstellen oder umgekehrt,
und wobei die Steuerung (9) dazu konfiguriert ist, den von der Timervorrichtung (13) erhaltenen Timerwert kontinuierlich mit dem vorbestimmten programmierbaren Timerwert zu vergleichen und einen Wert zu berechnen, der den Fortschritt in Richtung Zeitablauf des vorbestimmten programmierbaren Timerwertes ausdrückt, und
wobei der höhenverstellbare Tisch (1) ferner eine lichtemittierende Anordnung (11) umfasst, die so ausgelegt ist, dass sie Licht mit einer Wellenlänge innerhalb eines Wellenlängenbereichs emittiert, der mit einer ersten Wellenlänge (y) beginnt und mit einer zweiten Wellenlänge (z) endet, die dem Wert entspricht, der den Fortschritt in Richtung Zeitablauf des vorbestimmten programmierbaren Timerwerts ausdrückt,
**dadurch gekennzeichnet, dass** die lichtemittierende Anordnung (11) dazu konfiguriert ist, die Farbe des emittierten Lichts in einem fließenden Übergang von Grün über Orange zu Rot während des Fortschritts in Richtung Zeitablauf des vorbestimmten programmierbaren Timerwerts zu ändern.

2. Höhenverstellbarer Tisch (1) nach Anspruch 1, **dadurch gekennzeichnet, dass** ein Zeitintervall (q), das als Bereich von dem vorbestimmten programmierbaren Timerwert (x) bis zum Zeitablauf des vorbestimmten programmierbaren Timerwerts (x) definiert ist, auf dem Wellenlängenbereich der lichtemittierenden Anordnung (11) abgebildet ist, sodass der vorbestimmte programmierbare Timerwert (x) der ersten Wellenlänge (y) des Wellenlängenbereichs entspricht und der Zeitablauf des Timerwerts der zweiten Wellenlänge (z) des Wellenlängenbereichs entspricht.

3. Höhenverstellbarer Tisch (1) nach Anspruch 1 oder 2, **dadurch gekennzeichnet, dass** die lichtemittierende Anordnung (11) Licht mit einer Wellenlänge innerhalb des Wellenlängenbereichs intermittierend emittiert.

4. Höhenverstellbarer Tisch (1) nach einem der Ansprüche 1 bis 3, **dadurch gekennzeichnet, dass** die lichtemittierende Anordnung (11) eine Wellenlänge außerhalb des Wellenlängenbereichs emittiert, um einen besonderen Zustand der Steuerung (9) anzugeben.

5. Höhenverstellbarer Tisch (1) nach einem der Ansprüche 1 bis 4, **dadurch gekennzeichnet, dass** die erste Wellenlänge (y) einer Wellenlänge von etwa 500 Nanometern entspricht und dass die zweite Wellenlänge (z) einer Wellenlänge von etwa 700 Nanometern entspricht.

6. Höhenverstellbarer Tisch (1) nach einem der Ansprüche 1 bis 5, **dadurch gekennzeichnet, dass** die lichtemittierende Anordnung (11) in der Bedienungseinheit (6) angeordnet ist.

7. Höhenverstellbarer Tisch (1) nach einem der Ansprüche 1 bis 5, **dadurch gekennzeichnet, dass** der höhenverstellbare Tisch (1) eine Tischplatte (2) umfasst, in der die lichtemittierende Anordnung (11) angeordnet ist.

## Revendications

1. Table (1) réglable en hauteur comprenant :
- au moins un actionneur linéaire (3) électrique,
- un dispositif de commande (9) pour commander l'au moins un actionneur linéaire (3) électrique,
- un système pour déterminer le niveau de réglage en hauteur réel de la table (1) réglable associé au dispositif de commande (9) et fournir des informations d'entrée au dispositif de commande (9) concernant le niveau de réglage en hauteur réel de la table (1) réglable,
- une unité de fonctionnement (6) connectée au dispositif de commande (9) pour une activation par l'utilisateur demandant un réglage du niveau de hauteur de la table (1) en alimentant l'au moins un actionneur linéaire (3) à partir d'une source d'énergie électrique appropriée,
le dispositif de commande (9) comprenant :
- une mémoire (12) pour stocker au moins un paramètre de réglage de hauteur (7, 8) se référant à une position assise ou à une position debout,
- un dispositif de minuterie (13) adapté pour surveiller le temps pendant lequel le paramètre de réglage de hauteur (7, 8) s'est trouvé dans son état actuel, les états se référant à une position assise ou à une position debout, et
- une mémoire (14) pour stocker une valeur de minuterie programmable prédéterminée pour rappeler à l'utilisateur de régler la hauteur de la table (1) réglable en hauteur, du paramètre de réglage de hauteur (7, 8) se référant à une position assise jusqu'à une position debout ou vice-versa,
et où le dispositif de commande (9) est configuré pour comparer en continu la valeur de minuterie obtenue par le dispositif de minuterie (13) avec la valeur de minuterie programmable prédéterminée et pour calculer une valeur exprimant la progression vers l'expiration de la valeur de minuterie programmable prédéterminée, et
où la table (1) réglable en hauteur comprend en outre un agencement d'émission de lumière (11) adapté pour émettre de la lumière avec une longueur d'onde dans une plage de longueurs d'onde commençant par une première longueur d'onde (y) et se terminant par une seconde longueur d'onde (z) correspondant à la valeur exprimant la progression vers l'expiration de la valeur de minuterie programmable prédéterminée,
**caractérisée en ce que** l'agencement d'émission de lumière (11) est configuré pour changer la couleur de la lumière émise dans une transition fluide du vert, en passant par l'orange puis au rouge pendant ladite progression vers l'expiration de la valeur de minuterie programmable prédéterminée.

2. Table (1) réglable en hauteur selon la revendication 1, **caractérisée en ce qu'**un intervalle de temps (q) défini comme une plage allant de la valeur de minuterie programmable prédéterminée (x) à l'expiration de la valeur de minuterie programmable prédéterminée (x) est mappé dans la plage de longueurs d'onde de l'agencement d'émission de lumière (11), de telle sorte que la valeur de minuterie programmable prédéterminée (x) corresponde à la première longueur d'onde (y) de la plage de longueurs d'onde et que l'expiration de la valeur de minuterie corresponde à la seconde longueur d'onde (z) de la plage de longueurs d'onde.

3. Table (1) réglable en hauteur selon la revendication 1 ou 2, **caractérisée en ce que** l'agencement d'émission de lumière (11) émet de la lumière avec une longueur d'onde dans la plage des longueurs d'onde de manière intermittente.

4. Table (1) réglable en hauteur selon l'une quelconque des revendications 1 à 3, **caractérisée en ce que** l'agencement d'émission de lumière (11) émet une longueur d'onde en dehors de la plage de longueurs d'onde pour indiquer un état spécial du dispositif de commande (9).

5. Table (1) réglable en hauteur selon l'une quelconque des revendications 1 à 4, **caractérisée en ce que** la première longueur d'onde (y) correspond à une longueur d'onde d'environ 500 nanomètres et que la seconde longueur d'onde (z) correspond à une longueur d'onde d'environ 700 nanomètres.

6. Table (1) réglable en hauteur selon l'une quelconque des revendications 1 à 5, **caractérisée en ce que** l'agencement d'émission de lumière (11) est agencé dans l'unité de fonctionnement (6).

7. Table (1) réglable en hauteur selon l'une quelconque des revendications 1 à 5, **caractérisée en ce que** la table (1) réglable en hauteur comprend un plateau de table (2) dans lequel l'agencement d'émission de lumière (11) est agencé.
